# EUROPEAN PATENT APPLICATION

(11) **EP 4 651 253 A1**
(43) Date of publication of application: **19.11.2025**
(21) Application number: 25177116.8
(22) Date of filing: 16.05.2025
(51) Int. Cl.: H01M 10/0525, H01M 10/0567, H01M 10/42, H01M 10/0568, H01M 10/0569

(54) **ELECTROLYTE FOR LITHIUM SECONDARY BATTERY AND LITHIUM SECONDARY BATTERY INCLUDING THE SAME**

(30) Priority: 16.05.2024 KR 20240063890
(71) Applicant: SK On Co., Ltd., Seoul 03161 (KR); SK innovation Co., Ltd., Seoul 03188 (KR)
(72) Inventor: LEE, Hyun Ho, 34124 Daejeon (KR); KIM, Jong Chan, 34124 Daejeon (KR); SHIM, Yu Na, 34124 Daejeon (KR)
(74) Representative: Stolmár & Partner Patentanwälte PartG mbB

(57) **Abstract**

An electrolyte for a lithium secondary battery according to embodiments of the present disclosure may include an organic solvent, a lithium salt, and a phosphonate-based additive represented by Formula 1. The lithium secondary battery according to embodiments of the present disclosure may include a cathode, an anode disposed opposite to the cathode, and the electrolyte for a lithium secondary battery including a phosphonate-based additive represented by Formula 1.

## Description

### [BACKGROUND OF THE INVENTION]

### 1. Field of the Invention

The present disclosure relates to an electrolyte for a lithium secondary battery and a lithium secondary battery including the same. More specifically, the present disclosure relates to an electrolyte for a lithium secondary battery, which includes a solvent and an electrolyte salt, and a lithium secondary battery including the electrolyte.

### 2. Description of the Related Art

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

For example, the lithium secondary battery may include: an electrode assembly including a cathode, an anode, and a separation membrane (separator); and an electrolyte in which the electrode assembly is impregnated. The lithium secondary battery may further include, for example, a pouch-type outer case in which the electrode assembly and the electrolyte are housed.

As the application range of lithium secondary batteries expands, longer cycle life, higher capacity, and operational stability are required. Accordingly, a lithium secondary battery that provides uniform output and capacity even during repeated charging and discharging may be used.

However, according to repeated charging and discharging, for example, the output and capacity may decrease due to damage to the surface of the nickel-based lithium metal oxide used as a cathode active material, and side reactions between the nickel-based lithium metal oxide and the electrolyte may occur. In addition, the stability of the battery may deteriorate under severe high-temperature or low-temperature environments.

### [SUMMARY OF THE INVENTION]

An object of the present disclosure is to provide an electrolyte for a lithium secondary battery capable of imparting improved initial characteristics and high-temperature characteristics.

Another object of the present disclosure is to provide a lithium secondary battery including the electrolyte and exhibiting improved initial characteristics and high-temperature characteristics.

An electrolyte for a lithium secondary battery according to exemplary embodiments may include: an organic solvent; a lithium salt; and a phosphonate additive including a compound represented by Formula 1 below.

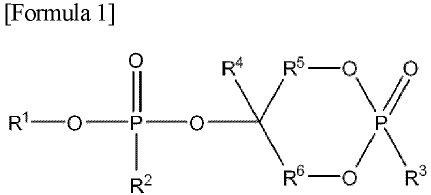

In Formula 1, R¹, R², R³ and R⁴ may each independently be an alkyl group having 1 to 8 carbon atoms, and R⁵ and R⁶ may each independently be an alkylene group having 1 to 8 carbon atoms.

In some embodiments, in Formula 1, R¹ to R⁴ may each independently be an alkyl group having 1 to 3 carbon atoms.

In some embodiments, in Formula 1, R¹ to R³ may have the same number of carbon atoms.

In some embodiments, in Formula 1, R⁵ and R⁶ may each independently be an alkylene group having 1 to 3 carbon atoms.

In some embodiments, in Formula 1, R⁵ and R⁶ may have the same number of carbon atoms.

In some embodiments, the phosphonate-based additive may include a compound represented by Formula 1-1 below:

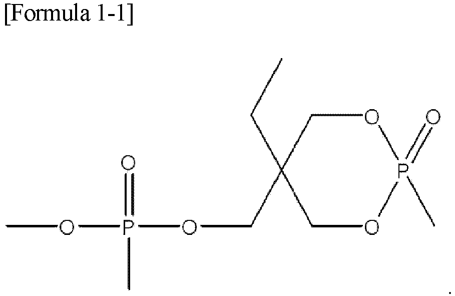

In some embodiments, the phosphonate-based additive may be included in an amount of 0.1% by weight to 10% by weight based on a total weight of the electrolyte for a lithium secondary battery.

In some embodiments, the phosphonate-based additive may be included in an amount of 0.2% by weight to 1% by weight based on the total weight of the electrolyte for a lithium secondary battery.

In some embodiments, the phosphonate-based additive may be included in an amount of 0.4% by weight to 0.7% by weight based on the total weight of the electrolyte for a lithium secondary battery.

In some embodiments, the electrolyte for a lithium secondary battery may further include at least one auxiliary additive selected from the group consisting of an unsaturated cyclic carbonate compound, a fluorine-substituted cyclic carbonate compound, a sultone compound, a cyclic sulfite compound, a phosphate compound and a borate compound.

In some embodiments, the auxiliary additive may not include a cyclic sulfate compound or a cyclic sulfite compound.

In some embodiments, the auxiliary additive may be included in an amount of 0.01% by weight to 5% by weight based on the total weight of the electrolyte for a lithium secondary battery.

In some embodiments, the organic solvent may include at least one selected from the group consisting of a carbonate solvent, an ester solvent, a ketone solvent, an alcohol solvent and an aprotic solvent.

In some embodiments, the lithium salt may include at least one selected from the group consisting of lithium tetrafluoroborate (LiBF₄), lithium hexafluorophosphate (LiPF₆), and lithium difluorophosphate (LiPO₂F₂).

A lithium secondary battery according to exemplary embodiments may include: a cathode; an anode disposed opposite to the cathode; and the above-described electrolyte for a lithium secondary battery.

The electrolyte for a lithium secondary battery according to exemplary embodiments of the present disclosure may include a phosphonate-based additive, thereby improving the initial capacity characteristics and overall capacity characteristics. For example, the phosphonate-based additive may interact with a cathode active material to protect the cathode active material, thereby improving the capacity characteristics.

The phosphonate-based additive may prevent the cathode active material from being denaturated even at a high temperature (for example, 60 °C), such that stable capacity characteristics and cycle life characteristics may be obtained.

In addition, the high-temperature stability of the phosphonate-based additive may reduce the amount of gas generated due to high-temperature charging and discharging of the secondary battery. Accordingly, the thickness change due to charging and discharging of the secondary battery may be reduced.

The lithium secondary battery according to exemplary embodiments of the present disclosure may include the electrolyte for a secondary battery, thereby improving the capacity characteristics at both low and high temperatures.

The electrolyte for a lithium secondary battery and the lithium secondary batteries of the present disclosure may be widely applied in green technology fields, such as electric vehicles, battery charging stations, as well as solar power generation, wind power generation, and the like, which use the batteries. The electrolyte for a lithium secondary battery and the lithium secondary batteries of the present disclosure may be used in eco-friendly electric vehicles, hybrid vehicles, and the like, which are aimed at mitigating climate change by reducing air pollution and greenhouse gas emission.

### [BRIEF DESCRIPTION OF THE DRAWINGS]

The above and other objects, features and other advantages of the present disclosure will be more clearly understood from the following detailed description taken in conjunction with the accompanying drawings, in which:

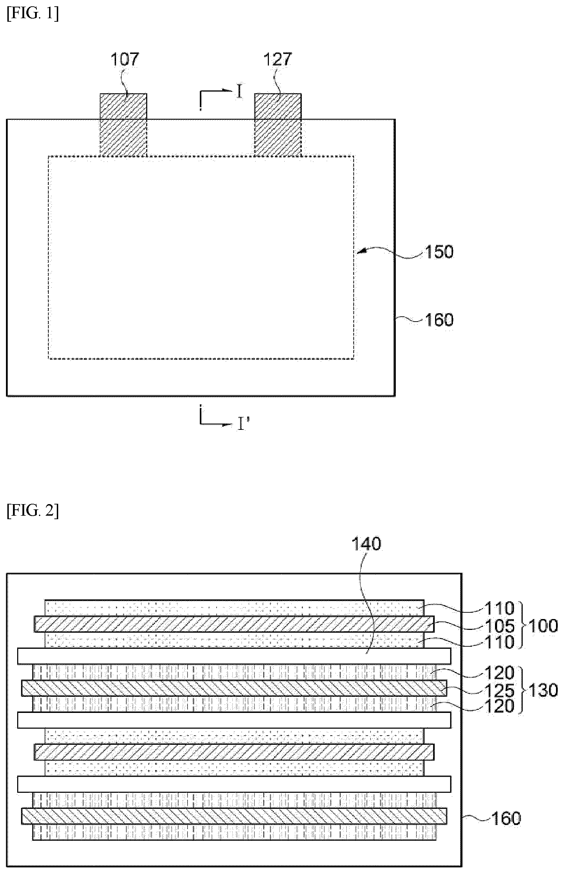

FIGS. 1 and 2 are schematic plan and cross-sectional views illustrating a lithium secondary battery according to exemplary embodiments, respectively.

### [DETAILED DESCRIPTION OF THE INVENTION]

According to exemplary embodiments of the present disclosure, there are provided an electrolyte for a lithium secondary battery, which includes a phosphonate-based additive, and a lithium secondary battery including the electrolyte for a lithium secondary battery.

Hereinafter, embodiments of the present disclosure will be described in detail. However, these are merely illustrative and the present disclosure is not limited to the specific embodiments described by way of example.

Unless otherwise defined herein, when a portion such as a layer, film, thin-film, region, or plate, etc. is present "on" or "above" another portion, it may include not only the case where the portion is present "directly on" the other portion, but also the case where another portion is present between them.

If there is an isomer of a compound represented by a formula used herein, the compound represented by the corresponding formula refers to the representative formula including the isomer.

The electrolyte for a lithium secondary battery according to exemplary embodiments (hereinafter, also abbreviated as the "electrolyte") may include an organic solvent, an electrolyte (e.g., a lithium salt), and a phosphonate-based additive.

The organic solvent may include an organic compound that provides sufficient solubility to the lithium salt and the phosphonate-based additive and does not chemically react within the lithium secondary battery. For example, the organic solvent may include at least one selected from the group consisting of a carbonate solvent, an ester solvent, an ether solvent, a ketone solvent, an alcohol solvent and an aprotic solvent. These may be used alone or in combination of two or more thereof.

The carbonate solvent may include, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, and vinylene carbonate, etc.

The ester solvent may include, for example, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), γ-butyrolactone (GBL), decanolide, valerolactone, mevalonolactone and caprolactone, etc.

The ether organic solvent may include, for example, dibutyl ether, tetraethylene glycol dimethyl ether (TEGDME), diethylene glycol dimethyl ether (DEGDME), dimethoxy ethane, diethoxy ethane, tetrahydrofuran (THF) and 2-methyltetrahydrofuran, etc.

The ketone solvent may include, for example, cyclohexanone.

The alcohol solvent may include, for example, ethyl alcohol, or isopropyl alcohol, etc.

The aprotic solvent may include, for example, dimethyl sulfoxide, acetonitrile, sulfolane and propylene sulfite, etc.

In some embodiments, a carbonate-based solvent may be used as the organic solvent. For example, at least one of ethylene carbonate (EC), ethyl methyl carbonate (EMC), dimethyl carbonate (DMC) and diethyl carbonate (DEC) may be used as the organic solvent. In one embodiment, two or more of ethylene carbonate (EC), ethyl methyl carbonate (EMC), dimethyl carbonate (DMC) and diethyl carbonate (DEC) may be used in combination as the organic solvent.

The organic solvent may be used as a balance or a remaining amount excluding the components described below included in the electrolyte.

The lithium salt is represented by, for example, Li⁺X⁻, and examples of an anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)C⁻, CF₃(CF₂)₇SO₃⁻, CF₃CO₂⁻, CH₃CO₂⁻, SCN⁻, and (CF₃CF₂SO₂)₂N⁻, etc. These may be used alone or in combination of two or more thereof.

In some embodiments, the lithium salt may include at least one selected from the group consisting of lithium tetrafluoroborate (LiBF₄), lithium hexafluorophosphate (LiPF₆) and lithium difluorophosphate (LiPO₂F₂). Accordingly, the transfer of lithium ions may be further promoted during charging and discharging of the lithium secondary battery. Accordingly, the capacity characteristics of the lithium secondary battery may be further improved.

In one embodiment, the lithium salt may be included in the organic solvent at a concentration of 0.01 M to 5 M, 0.01 M to 2 M, or 0.1 M to 2 M. Within the above range, the transfer of lithium ions and/or electrons may be promoted during charging and discharging of the lithium secondary battery, thereby enhancing the capacity characteristics.

According to exemplary embodiments, the phosphonate-based additive may include a compound represented by Formula 1 below.

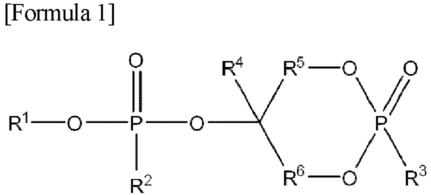

In Formula 1, R¹, R², R³, and R⁴ may each independently be an alkyl group having 1 to 8 carbon atoms.

In Formula 1, R⁵ and R⁶ may each independently be an alkylene group having 1 to 8 carbon atoms.

As used herein, the term "alkyl group" may be used to mean a compound in which a hydrogen atom bonded to a carbon is either substituted or unsubstituted with another atom or substituent.

For example, the term "alkyl group" as used herein may include a compound in which at least one of the hydrogen atoms bonded to the carbon of the alkyl group is substituted with an atom or substituent such as a halogen group, hydroxyl group, heteroalkyl group, heterocycloalkyl group, heteroaryl group, amine group, nitrile group, nitro group, silyl group, or alkoxy group, etc.

For example, the term "alkyl group" as used herein may include a compound in which a hydrogen atom bonded to the carbon of the alkyl group is not substituted with another atom or substituent.

A stable protective layer at high temperatures may be formed by the phosphonate group included in the phosphonate compound represented by Formula 1. Accordingly, the phosphonate compound represented by Formula 1 may stably protect the active material, thereby improving the high-temperature cycle life characteristics and high-temperature capacity characteristics of the secondary battery.

The phosphonate compound represented by Formula 1 includes a cyclic functional group, such that a stable solid electrolyte interface (SEI) film or cathode electrolyte interface (CEI) film may be formed on the anode surface or the cathode surface while the secondary battery is charged and discharged. Accordingly, additional decomposition of the electrolyte may be suppressed. As a result, the amount of gas generated during charging and discharging and the internal resistance of the secondary battery may be reduced.

In addition, the phosphonate compound may have a branched structure. Accordingly, the contact area of the phosphonate compound represented by Formula 1 with the electrolyte, lithium salt, etc. may be reduced. Therefore, the side reaction of the phosphonate compound represented by Formula 1 may be suppressed, thereby improving the cycle life characteristics.

The compound represented by Formula 1 may include two phosphonate groups. Accordingly, the high temperature capacity characteristics of the compound represented by Formula 1 may be further improved.

In some embodiments, in Formula 1, R¹ to R⁴ may be alkyl groups having 1 to 5, 1 to 3, or 1 to 2 carbon atoms. Accordingly, the content of phosphorus included in the additive of the same mass or volume may increase. Accordingly, the high-temperature stability due to phosphorus may be further enhanced.

In one embodiment, in Formula 1, the number of carbon atoms of R¹, R², and R³ may be the same. For example, in Formula 1, R¹, R², and R³ may be alkyl groups having the same number of carbon atoms. Accordingly, the phosphorus of the two phosphonate groups included in the compound represented by Formula 1 may maintain the same or similar distance relative to adjacent compounds. Therefore, it is possible to prevent preferential reaction of any one phosphonate group, and the initial capacity characteristics, low-temperature characteristics, and high-temperature characteristics of a secondary battery including the compound represented by Formula 1 may be further improved.

In some embodiments, in Formula 1, R⁵ and R⁶ may each independently be an alkylene group having 1 to 5, 1 to 3, or 1 carbon atom. Accordingly, the content of phosphorus included in the additive of the same mass or volume may increase. Therefore, high-temperature stability may be further enhanced.

In one embodiment, in Formula 1, the number of carbon atoms of R⁵ and R⁶ may be the same. Accordingly, the phosphonate group forming the ring structure may be stabilized. As a result, the phosphonate group of the ring structure may suppress side reactions with the electrolyte, etc., thereby further improving the cycle life characteristics.

In some embodiments, the phosphonate-based additive may include a compound represented by Formula 1-1 below.

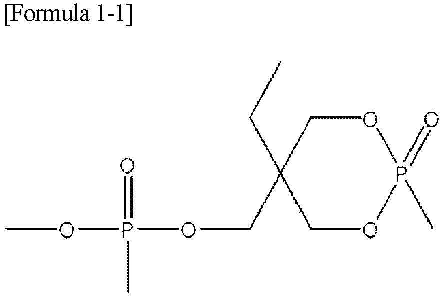

The compound represented by Formula 1-1 may have two phosphonate groups, an alkyl group and an alkylene group having a small number of carbon atoms, and a cyclic structure. Accordingly, the internal resistance of a secondary battery including the compound represented by Formula 1-1 may be reduced, and the high-temperature characteristics and cycle life characteristics may be improved.

In some embodiments, the phosphonate-based additive may be included in an amount of 0.1% by weight ("wt%") to 10 wt%, 0.1 wt% to 8 wt%, 0.2 wt% to 5 wt%, 0.2 wt% to 1 wt%, or 0.4 wt% to 0.7 wt% based on the total weight of the electrolyte. Within the above range, the phosphonate-based additive may form a protective film on the cathode active material or the anode active material to stabilize it. Accordingly, the output characteristics and cycle life characteristics of the secondary battery may be improved.

In one embodiment, the phosphonate-based additive may be included in an amount of 0.4 wt% to 5 wt%, 0.4 wt% to 3 wt%, or 0.5 wt% to 2 wt% based on the total weight of the electrolyte. Within the above range, the output characteristics and cycle life characteristics of a secondary battery including the phosphonate-based additive may be further improved.

In some embodiments, the electrolyte may further include an auxiliary additive. The auxiliary additive may include, for example, at least one selected from the group consisting of a cyclic carbonate compound, a fluorine-substituted carbonate compound, a sultone compound, a cyclic sulfate compound, a cyclic sulfite compound, a phosphate compound, and a borate compound. These may be used alone or in combination of two or more thereof.

The unsaturated cyclic carbonate compound may include vinylene carbonate (VC), vinyl ethylene carbonate (VEC), etc.

The fluorine-substituted cyclic carbonate compound may include fluoroethylene carbonate (FEC), etc.

The sultone compound may include 1,3-propane sultone (PS), 1,3-propene sultone (PRS), 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

In some embodiments, the auxiliary additive may be included in an amount of 0.01 wt% to 5 wt%, 0.05 wt% to 5 wt%, 0.1 wt% to 5 wt%, 0.1 wt% to 3 wt%, or 0.1 wt% to 2 wt%. Within the above content range, the auxiliary additive, together with the above-described phosphonate-based additive, may form a protective film on the cathode active material or the anode active material, and may improve the durability of the protective film. Accordingly, the cycle life characteristics and capacity characteristics of the secondary battery including the auxiliary additive may be further improved.

In some embodiments, the auxiliary additive may not include a cyclic sulfate compound and a cyclic sulfite compound. For example, the auxiliary additive may not include 1,2-ethylene sulfate, 1,2-propylene sulfate, ethylene sulfite, butylene sulfite, etc.

The cyclic sulfate compound and the cyclic sulfite compound have many lone pairs of electrons and an unstable chemical structure compared to linear compounds. Therefore, the lone pair of electrons may react with the compound represented by Formula 1, causing a side reaction, thereby deteriorating the cycle life characteristics and high-temperature characteristics. When the cyclic sulfate compound and the cyclic sulfite compound are not included as auxiliary additives, side reactions of the compound represented by Formula 1 may be suppressed, thereby further improving the high-temperature characteristics and the cycle life characteristics.

FIGS. 1 and 2 are schematic plan and cross-sectional views illustrating a lithium secondary battery according to exemplary embodiments, respectively. For example, FIG. 2 is a cross-sectional view taken on line I-I' in FIG. 1.

Referring to FIGS. 1 and 2, the lithium secondary battery may include a cathode 100, an anode 130 disposed opposite to the cathode 100, and the above-described electrolyte.

The cathode 100 may include a cathode current collector 105 and a cathode active material layer 110 disposed on at least one surface of the cathode current collector 105.

The cathode current collector 105 may include stainless steel, nickel, aluminum, titanium or an alloy thereof. The cathode current collector 105 may also include aluminum or stainless steel having a surface treated with carbon, nickel, titanium or silver. For example, the cathode current collector 105 may have a thickness of 10 to 50 µm.

The cathode active material layer 110 may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or crystal structure represented by Formula 2 below.

[Formula 2] LiₓNiₐM_{b}O_{2+z}

In Formula 2, x, a, b and z may satisfy 0.9≤x≤1.2, 0.6≤a≤0.99, 0.01≤b≤0.4, -0.5≤z≤0.1. As described above, M may include Co, Mn and/or Al.

The chemical structure represented by Formula 2 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 2 is provided to express the bonding relationship between the main active elements, and is a formula encompassing the introduction and substitution of the additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form a bond, and it should be understood that this case is also included within the chemical structure range represented by Formula 2.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

For example, the cathode active material or the lithium-nickel metal oxide may include a layered structure or crystal structure represented by Formula 2-1 below.

[Formula 2-1] LiₓNiₐM1_{b1}M2_{b2}O_{2+z}

In Formula 2-1, M1 may include Co, Mn, and/or Al. M2 may include the auxiliary elements described above. In Formula 1-1, x, a, b1, b2 and z may satisfy 0.9≤x≤1.2, 0.6≤a≤0.99, 0.01≤b1+b2≤0.4, -0.5≤z≤0.1 .

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to become incorporated into the bonding structure represented by Formula 2 or Formula 2-1 above.

The cathode active material may include a nickel-cobalt-manganese (NCM)-based lithium oxide. In this case, an NCM-based lithium oxide with an increased content of nickel may be used.

Nickel may be provided as a transition metal associated with the output and capacity of the lithium secondary battery. Therefore, as described above, by employing a high-content (High-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity. In addition, the above-described phosphonate-based additive may stabilize the cathode active material interface including a high nickel content, thereby improving high-temperature cycle life characteristics and reducing resistance.

The content ofNi (e.g., a molar fraction of nickel based on the total number of moles of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, or a lithium nickel oxide-based active material.

In some embodiments, the cathode active material may include a lithium iron phosphate (LFP)-based active material represented by Formula 3 below. For example, the LFP active material may be LiFePO₄. The LFP active material may be structurally more stable than an NCM-based active material, and thus may have high cycle life characteristics and high stability. When the above-described phosphonate-based additive is included in a secondary battery using the LFP active material as a cathode active material, the cycle life characteristics may be further improved, and the resistance may be further reduced.

[Formula 3] LiFeQₗ₋ₜPO₄

In Formula 3, t may be in a range of 0<t≤1, Q may include at least one of Na, Mg, Ca, Y, Ti, Hf, V, Nb, Ta, Cr, Mo, W, Cu, Ag, Zn, B, Al, Ga, C, Si, Sn, Sr, Ba, Ra, P or Zr.

In some embodiments, the cathode active material may include, for example, a manganese (Mn)-rich active material, a lithium rich layered oxide (LLO)/over lithiated oxide (OLO)-based active material, or a cobalt (Co)-less active material, which have a chemical structure or crystal structure represented by Formula 4 below.

[Formula 4] p[Li₂MnO₃]·(1-p)[LiqJO₂]

In Formula 4, p and q may satisfy 0<p<1, 0.9≤q≤1.2, and J may include at least one element among Mn, Ni, Co, Fe, Cr, V, Cu, Zn, Ti, Al, Mg and B.

For example, a cathode slurry may be prepared by mixing the above-described cathode active material in a solvent. The cathode slurry may be applied to a cathode current collector, then dried and pressed to prepare the cathode active material layer 110. The cathode slurry may be applied to a cathode current collector, then dried and pressed to prepare the cathode active material layer 110. The cathode slurry may be applied to the cathode current collector 105, then dried and pressed to prepare the cathode active material layer 110. The coating process may be performed using methods such as gravure coating, slot die coating, simultaneous multilayer die coating, imprinting, doctor blade coating, dip coating, bar coating or casting, but it is not limited thereto. The cathode active material layer 110 may include a binder, and optionally may further include a conductive material, a thickener, etc.

Non-limiting examples of the solvent used in the preparation of the cathode active material layer 110 may include N-methyl-2-pyrrolidone (NMP), dimethylformamide, dimethylacetamide, N,N-dimethylaminopropylamine, ethylene oxide, tetrahydrofuran, and the like, but they are not limited thereto.

The binder may include polyvinylidene fluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer 110 in order to enhance the conductivity thereof and/or the mobility of lithium ions or electrons. For example, the conductive material may include carbon-based conductive materials such as graphite, carbon black, acetylene black, Ketjen black, graphene, carbon nanotubes (CNTs), vapor-grown carbon fibers (VGCFs), carbon fibers, and/or metal-based conductive materials, including perovskite materials, such as tin, tin oxide, titanium oxide, LaSrCoO₃, and LaSrMnO₃, but it is not limited thereto

The cathode active material layer 110 may further include a thickener and/or a dispersant. For example, the cathode active material layer 110 may include a thickener such as carboxy methyl cellulose (CMC).

The anode 130 may include an anode current collector 125 and an anode active material layer 120 disposed on at least one surface of the anode current collector 125.

Non-limiting examples of the anode current collector 125 may include a copper foil, a nickel foil, a stainless steel foil, a titanium foil, a nickel foam, a copper foam, a polymer substrate coated with conductive metal and the like. For example, the anode current collector 125 may have a thickness of 10 µm to 50 µm.

The anode active material layer 120 may include an anode active material. A material capable of intercalating and deintercalating lithium ions may be used as the anode active material. For example, the anode active material may include crystalline carbon-based materials such as crystalline carbon, amorphous carbon, a carbon composite, or carbon fibers, etc.; lithium metal; a lithium alloy; a silicon (Si)-containing material or a tin (Sn)-containing material, etc.

The amorphous carbon may include, for example, natural graphite, artificial graphite, graphite cokes, mesocarbon microbeads (MCMB), mesophase pitch-based carbon fibers (MPCF), etc.

Examples of the crystalline carbon may include graphite-based carbons such as natural graphite, artificial graphite, graphite cokes, graphite MCMB, and graphite MPCF, etc.

The lithium metal may include pure lithium metal or lithium metal having a protective layer formed thereon for suppressing dendrite growth, etc. In one embodiment, a lithium metal-containing layer deposited or coated on the anode current collector 125 may be used as the anode active material layer 120. In one embodiment, a lithium thin-film layer may be used as the anode active material layer 120.

Elements included in the lithium alloy may include aluminum, zinc, bismuth, cadmium, antimony, silicon, lead, tin, gallium, indium, etc.

The silicon-containing material may provide more enhanced capacity characteristics. The silicon-containing material may include Si, SiOₓ (0<x<2), metal-doped SiOₓ (0<x<2), a silicon-carbon composite, etc. The metal may include lithium and/or magnesium, and the metal-doped SiOₓ (0<x<2) may include a metal silicate.

For example, an anode slurry may be prepared by mixing the anode active material in a solvent. The anode slurry may be applied/deposited to the anode current collector 125, then dried and pressed to prepare the anode active material layer 120. The coating process may be performed using methods such as gravure coating, slot die coating, simultaneous multilayer die coating, imprinting, doctor blade coating, dip coating, bar coating, casting, etc., but it is not limited thereto. The anode active material layer 120 may further include a binder, and optionally may further include a conductive material, a thickener, etc.

In some embodiments, the anode 130 may include the anode active material layer 120 in the form of lithium metal, formed through a deposition/coating process.

The solvent for the anode active material layer 120 may include, for example, water, pure water, deionized water, distilled water, ethanol, isopropanol, methanol, acetone, n-propanol, t-butanol, etc.

The above-described materials that can be used when preparing the cathode as the binder, conductive agent, and thickener may be used for the anode.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder.

A separation membrane 140 may be interposed between the cathode 100 and the anode 130. The separation membrane 140 may be configured to prevent an electrical short-circuit between the cathode and the anode, and to allow a flow of ions to occur. For example, the separation membrane 140 may have a thickness of 10 µm to 20 µm.

For example, the separation membrane 140 may include a porous polymer film or a porous nonwoven fabric. The porous polymer film may include a polyolefin-based polymer such as an ethylene polymer, a propylene polymer, an ethylene/butene copolymer, an ethylene/hexene copolymer, and an ethylene/methacrylate copolymer, etc. The porous nonwoven fabric may include glass fibers having a high melting point, polyethylene terephthalate fibers, etc. The separation membrane 140 may also include a ceramic-based material. For example, inorganic particles may be applied to the polymer film or dispersed within the polymer film to improve heat resistance.

The separation membrane 140 may have a single-layer or multi-layer structure including the above-described polymer film and/or non-woven fabric.

According to exemplary embodiments, the cathode 100, the anode 130 and the separation membrane 140 may be repeatedly disposed to form an electrode assembly 150. In some embodiments, the electrode assembly 150 may be of a winding type, a stacking type, a z-folding type, or a stack-folding type.

The electrode assembly 150 may be housed in a case 160 together with an electrolyte to define a lithium secondary battery.

As illustrated in FIG. 1, electrode tabs (a cathode tab and an anode tab) protrude from the cathode current collector 105 and the anode current collector 125, respectively, which belong to each electrode cell, and may extend to one side of the outer case 160. The electrode tabs may be fused together with the one side of the outer case 160 to form electrode leads (a cathode lead 107 and an anode lead 127) that extend or are exposed to an outside of the outer case 160.

For example, a pouch-type case, a prismatic case, a cylindrical case, or a coin-type case, etc. may be used as the case 160.

### Examples and Comparative Examples

### Example 1

### (1) Preparation of electrolyte

A 1 M LiPF₆ solution (a mixed solvent of EC/EMC/DEC in a volume ratio of 25:45:30) was prepared. 1 wt% of fluoroethylene carbonate (FEC), 1 wt% of lithium difluoro phosphate, 0.3 wt% of 1,3-propene sultone (PRS), 0.5 wt% of 1,3-propane sultone (PS), and 0.5 wt% of ethylene sulfate, based on the total weight of the electrolyte, were added to the LiPF₆ solution, and 0.3 wt% of a compound represented by Formula 1-1 (5-ethyl-2-methyl-1,3,2-dioxaphosphorinan-5-yl(methyl dimethyl phophonate P-oxide), CAS No: 41203-81-0, Beta Pharma (Shanghai) Co.) was further added as a phosphonate additive.

### (2) Manufacture of lithium secondary battery

A slurry was prepared by mixing LiNi_{0.88}Co_{0.06}Mn_{0.06}O₂ as a cathode active material, CNTs as a conductive material, and PVdF as a binder were at a weight ratio of 98:1:1 and dispersing the mixture in N-methyl-2-pyrrolidone. The slurry was uniformly applied to an aluminum foil having a thickness of 12 µm, then vacuum-dried and pressed at 130 °C to prepare a cathode for a lithium secondary battery.

An anode slurry was prepared, including 95 wt% of an anode active material in which artificial graphite and natural graphite are mixed at a weight ratio of 7:3, 3 wt% of graphite as a conductive material, and 2 wt% of a binder in which styrene-butadiene rubber (SBR) and carboxymethyl cellulose (CMC) as a thickener are mixed at a weight ratio of 1:1. The anode slurry was uniformly applied to a region of a copper foil (thickness: 15 µm) having a protrusion part (anode tab) on one side except for the protrusion part, having a thickness of 15 µm, then dried and pressed to prepare an anode.

The cathode and the anode prepared as described above were cut into a predetermined size and laminated, and a separator (polyethylene, thickness 20 µm) was interposed between the cathode and the anode to form an electrode assembly, and then tab parts of the cathode and the anode were welded, respectively.

The electrode assembly was put into a pouch, followed by sealing three sides of the pouch except for an electrolyte injection side. At this time, a portion having the electrode tab was included in the sealing part. After injecting the electrolyte prepared in (1) above through the electrolyte injection side except for the sealing part, and the remaining side was also sealed, followed by allowing it to be impregnated for 12 hours or more to manufacture a lithium secondary battery sample.

### Examples 2 to 6 and Comparative Examples 1 to 3

Secondary batteries were manufactured in the same manner as in Example 1, except that the types and contents of the phosphonate-based additive and other additives were changed as shown in Table 1 below.

**[TABLE 1]**

| | Type and content of additive (wt%) | | | | | | |
|---|---|---|---|---|---|---|---|
| | FEC | W3 | PRS | PS | ESA | A1 | A2 |
| Example 1 | 1 | 1 | 0.3 | 0.5 | 0.5 | 0.3 | - |
| Example 2 | 1 | 1 | 0.3 | 0.5 | 0.5 | 0.5 | - |
| Example 3 | 1 | 1 | 0.3 | 0.5 | 0.5 | 0.7 | - |
| Example 4 | 1 | 1 | 0.3 | 0.5 | - | 0.3 | - |
| Example 5 | 1 | 1 | 0.3 | 0.5 | - | 0.5 | - |
| Example 6 | 1 | 1 | 0.3 | 0.5 | - | 0.7 | - |
| Comparative Example 1 | 1 | 1 | 0.3 | 0.5 | 0.5 | - | - |
| Comparative Example 2 | 1 | 1 | 0.3 | 0.5 | 0.5 | - | 0.5 |
| Comparative Example 3 | 1 | 1 | 0.3 | 0.5 | - | - | 0.5 |

The specific components described in Table 1 are as follows.
FEC: Fluoroethylene carbonate
W3: Lithium difluoro phosphate
PRS: 1,3-propene sultone
PS: 1,3-propane sultone
ESA: Ethylene sulfate
A1: A compound represented by Formula 1-1 below 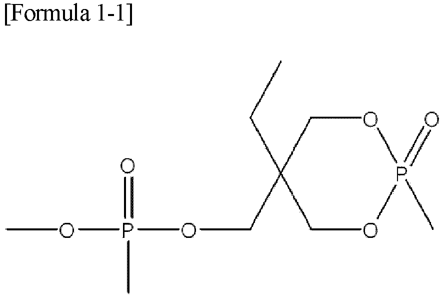
A2: A compound represented by Formula 5 below.

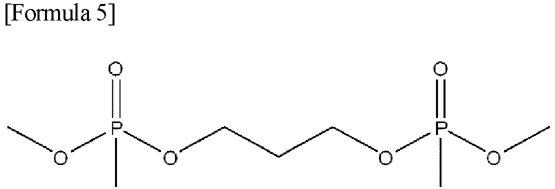

### Experimental Example

### (1) Evaluation of room-temperature characteristics

### 1-1) Evaluation of initial capacity

The lithium secondary batteries of the examples and comparative examples were subjected to 0.2 C-rate CC/CV charging (3.65 V, 0.05 C cut-off) at 25 °C, and then 0.5 C-rate CC discharging (2.5 V cut-off). Thereafter, the initial capacity was measured.

### 1-2) Evaluation of internal resistance (D_DCIR)

At a 60% state-of-charge (SOC) point, charging and discharging were performed for 10 seconds at each corresponding C-rate, while sequentially varying the C-rate to 0.2 C, 0.5 C, 1.0 C, 1.5 C, 2.0 C, 2.5 C and 3.0 C. Then, the terminal voltage points were plotted to construct a linear equation, and the slope of the resulting line was adopted as the D_DCIR.

### 1-3) Evaluation of resistance increase rate

Based on the internal resistance (D_DCIR) of Comparative Example 1, the increase amount of the internal resistance (D_DCIR) of the examples and comparative examples was calculated as a percentage to evaluate the resistance increase rate.

### (2) Evaluation of high-temperature storage characteristics (at 60 °C)

### 2-1) Evaluation of battery thickness after high-temperature storage

The lithium secondary batteries of the examples and comparative examples charged as described in 1-1) were stored in a constant-temperature and humidity chamber at 60 °C for 6 weeks, and then the thicknesses of the batteries were measured using a plate thickness measuring device (Mitutoyo, 543-490B).

The thickness of the batteries measured after storage in each example and comparative example was calculated as a percentage relative to the thickness of the battery of Comparative Example 1 measured after storage at 60 °C.

### 2-2) Evaluation of high-temperature storage capacity retention rate (Ret) after high-temperature storage

The lithium secondary batteries of the examples and comparative examples stored at high temperatures as described above were discharged at 0.5 C-rate CC (2.5 V cut-off), and the discharge capacity after high-temperature storage was measured.

The capacity retention rate was calculated as a percentage of the discharge capacity after high-temperature storage relative to the initial capacity measured in 1-1). High-temperature storage capacity retention rate (%) = (Discharge capacity after high- temperature storage/Initial capacity) × 100

### 2-3) Evaluation of high-temperature storage capacity recovery rate (Rec) after high-temperature storage

After measuring the capacity retention rate according to 2-2), the secondary batteries of the examples and comparative examples were subjected to 0.5 C-rate CC/CV charging (3.65 V, 0.05 C cut-off) and 0.5 C-rate CC discharging (2.5 V cut-off) to measure the discharge capacity.

The capacity recovery rate was calculated as the percentage of the discharge capacity after the capacity retention rate measurement relative to the initial capacity measured in 1-1). High-temperature storage capacity recovery rate (%) = (Discharge capacity after capacity retention rate measurement/Initial capacity) × 100

### 2-4) Evaluation of high-temperature internal resistance after high-temperature storage

The high-temperature internal resistance (D_DCIR) of the lithium secondary batteries of the examples and comparative examples stored at high temperatures was measured in the same manner as in 1-2).

### 2-5) Evaluation of high-temperature resistance increase rate

Based on the high-temperature internal resistance (D_DCIR) of Comparative Example 1, the increase in high-temperature internal resistance (D_DCIR) of the examples and comparative examples was calculated as a percentage to evaluate the resistance increase rate.

The evaluation results are shown in Table 2 below.

**[TABLE 2]**

| Classification | Evaluation of room-temperature property | | | Evaluation of high-temperature storage characteristics (at 60°C) | | | | |
|---|---|---|---|---|---|---|---|---|
| | Initial Volume (mAh/g) | D_DCIR (mΩ) | Resistance increase rate (%) | Thickness increase rate (%) | Ret. (%) | Rec. (%) | D_DCIR (mΩ) | Resistance increase rate (%) |
| Example 1 | 1,855 | 38.1 | 0.1 | 3.1 | 89.5 | 90.7 | 39.3 | 12 |
| Example 2 | 1,843 | 35.2 | -7.6 | 5.5 | 91.8 | 93.9 | 39.2 | 12 |
| Example 3 | 1,849 | 35.5 | -6.8 | -9.4 | 94.6 | 96.6 | 39.0 | 11 |
| Example 4 | 1,857 | 38.9 | 2.1 | 11.7 | 90.5 | 91.1 | 37.2 | 6 |
| Example 5 | 1,858 | 35.7 | -6.3 | -3.1 | 92.1 | 91.3 | 39 | 11 |
| Example 6 | 1,842 | 37.6 | -1.3 | -12.5 | 94.3 | 96.1 | 39.3 | 12 |
| Comparative Example 1 | 1,838 | 39.1 | - | - | 88.2 | 89.6 | 40.0 | - |
| Comparative Example 2 | 1,846 | 39.5 | 3.7 | -0.8 | 93.3 | 93.5 | 40.2 | 15 |
| Comparative Example 3 | 1,842 | 39.4 | 3.4 | -1.6 | 93.2 | 93.4 | 40.3 | 15 |

Referring to Table 2, in examples which included a phosphonate additive including a compound represented by Formula 1, the room-temperature initial capacity was 1,842 mAh/g or higher, and the room-temperature resistance (D_DCIR) was 38.9 mΩ or lower. In addition, the high-temperature storage capacity retention and recovery rate were 89.5% and 90.7% or higher, respectively, and the high-temperature storage resistance (D_DCIR) was 39.3 or lower.

In Examples 5 and 6, where the compound represented by Formula 1-1 was included in an amount of 0.4 wt% or more based on the total weight of the electrolyte and the cyclic sulfate compound and the cyclic sulfite compound were not included, the room-temperature and high-temperature resistance (D_DCIR) and the high temperature thickness increase rate were slightly reduced, and the capacity retention rate and capacity recovery rate were slightly improved.

In comparative examples, where the electrolyte did not include a phosphonate-based additive, the initial capacity was decreased, the room-temperature and high-temperature resistance (D_DCIR) were increased, and the capacity retention rate and capacity recovery rate were decreased compared to the examples where other conditions were maintained the same.

### [Description of Reference Numerals]

100: Cathode
105: Cathode current collector
107: Cathode lead
110: Cathode active material layer
120: Anode active material layer
125: Anode current collector
127: Anode lead
130: Anode
140: Separation membrane
150: Electrode assembly
160: Case

## Claims

1. An electrolyte for a lithium secondary battery comprising:
an organic solvent;
a lithium salt; and
a phosphonate additive comprising a compound represented by Formula 1 below: 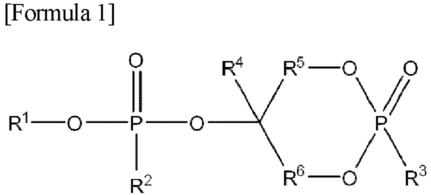
(in Formula 1, R¹, R², R³ and R⁴ are each independently an alkyl group having 1 to 8 carbon atoms, and R⁵ and R⁶ are each independently an alkylene group having 1 to 8 carbon atoms).

2. The electrolyte for a lithium secondary battery according to claim 1, wherein in Formula 1, R¹ to R⁴ are each independently an alkyl group having 1 to 3 carbon atoms.

3. The electrolyte for a lithium secondary battery according to claim 2, wherein in Formula 1, R¹ to R³ have the same number of carbon atoms.

4. The electrolyte for a lithium secondary battery according to any one of claims 1 to 3, wherein in Formula 1, R⁵ and R⁶ are each independently an alkylene group having 1 to 3 carbon atoms.

5. The electrolyte for a lithium secondary battery according to claim 4, wherein in Formula 1, R⁵ and R⁶ have the same number of carbon atoms.

6. The electrolyte for a lithium secondary battery according to any one of claims 1 to 5, wherein the phosphonate-based additive comprises a compound represented by Formula 1-1 below:

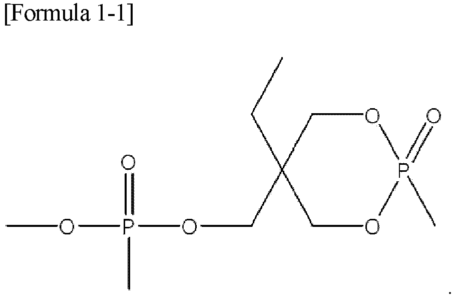

7. The electrolyte for a lithium secondary battery according to any one of claims 1 to 6, wherein the phosphonate-based additive is included in an amount of 0.1% by weight to 10% by weight based on a total weight of the electrolyte for a lithium secondary battery.

8. The electrolyte for a lithium secondary battery according to any one of claims 1 to 7, wherein the phosphonate-based additive is included in an amount of 0.2% by weight to 1% by weight based on the total weight of the electrolyte for a lithium secondary battery.

9. The electrolyte for a lithium secondary battery according to any one of claims 1 to 8, wherein the phosphonate-based additive is included in an amount of 0.4% by weight to 0.7% by weight based on the total weight of the electrolyte for a lithium secondary battery.

10. The electrolyte for a lithium secondary battery according to any one of claims 1 to 9, further comprising at least one auxiliary additive selected from the group consisting of an unsaturated cyclic carbonate compound, a fluorine-substituted cyclic carbonate compound, a sultone compound, a cyclic sulfite compound, a phosphate compound and a borate compound.

11. The electrolyte for a lithium secondary battery according to claim 10, wherein the auxiliary additive does not comprise a cyclic sulfate compound or a cyclic sulfite compound.

12. The electrolyte for a lithium secondary battery according to claim 10, wherein the auxiliary additive is included in an amount of 0.01% by weight to 5% by weight based on the total weight of the electrolyte for a lithium secondary battery.

13. The electrolyte for a lithium secondary battery according to any one of claims 1 to 12, wherein the organic solvent comprises at least one selected from the group consisting of a carbonate solvent, an ester solvent, a ketone solvent, an alcohol solvent and an aprotic solvent.

14. The electrolyte for a lithium secondary battery according to any one of claims 1 to 13, wherein the lithium salt comprises at least one selected from the group consisting of lithium tetrafluoroborate (LiBF₄), lithium hexafluorophosphate (LiPF₆), and lithium difluorophosphate (LiPO₂F₂).

15. A lithium secondary battery comprising:
a cathode;
an anode disposed opposite to the cathode; and
the electrolyte for a lithium secondary battery according to any one of claims 1 to 14.
